# EUROPÄISCHE PATENTSCHRIFT

(11) **EP 4 449 071 B1**
(45) Veröffentlichungstag und Bekanntmachung des Hinweises auf die Patenterteilung: **29.10.2025**
(21) Anmeldenummer: 22823125.4
(22) Anmeldetag: 13.12.2022
(51) Int. Cl.: G01G 17/06, B65B 3/00, B65B 65/00

(54) **ANLAGE ZUR DURCHFÜHRUNG VON ARBEITSPROZESSEN AN WERKSTÜCKEN ODER DERGLEICHEN**
INSTALLATION FOR CARRYING OUT WORKING PROCESSES ON WORKPIECES OR THE LIKE
INSTALLATION POUR L'EXÉCUTION DE PROCESSUS DE TRAVAIL SUR DES PIÈCES À USINER OU SIMILAIRES

(30) Priorität: 13.12.2021 DE 102021214251
(43) Veröffentlichungstag der Anmeldung: 23.10.2024
(73) Patentinhaber: Robert Bosch GmbH, 70442 Stuttgart (DE)
(72) Erfinder: TOUHENT, Sami, 72116 Moessingen (DE)
(86) Internationale Anmeldenummer: PCT/EP2022/085663
(87) Internationale Veröffentlichungsnummer: WO 2023/110898

(56) Entgegenhaltungen:
- DE-A1- 102014 214 696
- US-A1- 2004 173 284

## Beschreibung

### Technisches Gebiet

Die Erfindung betrifft eine Anlage zur Durchführung von Arbeitsprozessen an Werkstücken oder dgl., bei der auf vorteilhafte Art und Weise eine zum Abgeben eines flüssigen oder pastösen Mediums dienende Prozessstation in Form einer Dosiereinrichtung mit Blick die Menge von abgegebenem Medium kalibriert bzw. überprüft werden kann.

### Stand der Technik

Aus der DE 10 2014 214 696 A1 der Anmelderin ist eine Anlage zur Durchführung von Arbeitsprozessen an Werkstücken oder dgl. mit den Merkmalen des Oberbegriffs des Anspruchs 1 bekannt. Die bekannte Anlage dient zum Abfüllen von Behältnissen mittels Dosiereinrichtungen, wobei die Behältnisse aus dem Bereich einer ersten Fördereinrichtung mittels unabhängig voneinander bewegbarer, durch elektromagnetische Antriebe angetriebene erste Transporteinheiten entnommen werden. Nach der Entnahme der Behältnisse werden diese durch die ersten Transporteinheiten einer Dosiereinrichtung zugeführt und nach dem Abgeben einer bestimmten Menge des Mediums von den ersten Transporteinheiten in eine zweite Fördereinrichtung übergeben.

Zur Überprüfung der Füllmengen bei einer Dosiereinrichtung ist es darüber hinaus aus der US 2004/0173284 A1 bekannt, neben einer Förderstrecke für die Behältnisse Kalibrierstationen in Form von Wiegestationen anzuordnen. Die Dosiereinrichtung ist dazu ausgebildet, deren Füllnadeln zwischen einer ersten Position zur Abgabe des Füllguts in die Behältnisse im Bereich der Förderstrecke und einer zweiten Position in den Bereich der Kalibrierstationen zu bewegen.

### Offenbarung der Erfindung

Die erfindungsgemäße Anlage zur Durchführung von Arbeitsprozessen an Werkstücken oder dgl. mit den Merkmalen des Anspruchs 1 hat den Vorteil, dass sie im Zusammenhang mit im Bereich der Arbeitsfläche ortsfest angeordneten Dosiereinrichtungen eine vorteilhafte Kalibrierung bzw. Überprüfung der Dosiereinrichtungen mit Blick auf die von den Dosiereinrichtungen abgegebenen Mengen an flüssigem oder pastösem Medium ermöglicht.

Der Erfindung liegt die Idee zugrunde, durch zweite, von den ersten Transporteinheiten unabhängig bewegbare Transporteinheiten die Möglichkeit zu schaffen, am Ort der Dosiereinrichtungen im Bereich der Arbeitsfläche von den Dosiereinrichtungen abgegebenes Medium aufzunehmen und die Menge des Mediums neben der Arbeitsfläche im Bereich einer Wiegeeinrichtung zu erfassen.

Vor dem Hintergrund der obigen Erläuterungen ist es daher bei einer erfindungsgemäßen Anlage zur Durchführung von Arbeitsprozessen an Werkstücken oder dgl. mit den Merkmalen des Anspruchs 1 vorgesehen, dass neben der Arbeitsfläche eine Wiegeeinrichtung mit einer Messzelle zum Wiegen eines von der Messzelle freistellbaren Messbechers angeordnet ist, und dass zusätzlich wenigstens eine zweite, elektromagnetisch bewegbare Transporteinheit dazu ausgebildet ist, den Messbecher zwischen dem Bereich der Messzelle und dem Bereich der Dosiereinrichtung zu transportieren.

Vorteilhafte Weiterbildungen der erfindungsgemäßen Anlage zur Durchführung von Arbeitsprozessen an Werkstücken oder dgl. sind in den Unteransprüchen angeführt.

Besonders bevorzugt mit Blick auf eine universelle Einsetzbarkeit der zweiten Transporteinheit zur Durchführung unterschiedlicher, den Hauptprozessen nebengeordneter Prozesse ist es, wenn die wenigstens eine zweite Transporteinheit dazu ausgebildet ist, alternativ zum Messbecher andere Objekte in den Bereich einer Prozessstation zu transportieren.

In bevorzugter Weiterbildung einer derartigen, universell einsetzbaren zweiten Transporteinheit ist es insbesondere vorgesehen, dass die wenigstens eine zweite Transporteinheit eine Aufnahmeeinrichtung mit wenigstens einer standardisierten Schnittstelle für die unterschiedlichen Objekte aufweist.

Um während des eigentlichen Betriebs der Anlage den Bereich der Arbeitsfläche für die ersten Transporteinheiten freizuhalten bzw. möglichst große Transportflächen für die ersten Transporteinheiten auszubilden, ist es vorgesehen, dass die wenigstens eine zweite Transporteinheit bei Nichtgebrauch in einer Bereitstellungszone im Bereich der Arbeitsfläche angeordnet ist. Diese Bereitstellungszone ist typischerweise an einem Randbereich der Arbeitsfläche, der üblicherweise von den ersten Transporteinheiten beim Transportieren von Werkstücken oder dgl. benutzt wird, beabstandet.

In bevorzugter konstruktiver Ausgestaltung der Wiegeeinrichtung weist diese ein Hubelement zum Freistellen des Messbechers von der Wiegezelle und zur Übergabe und Übernahme des Messbechers an die bzw. von der zweiten Transporteinheit auf.

Um ein möglichst genaues Wiegeergebnis zu erreichen, ist es darüber hinaus vorteilhaft, wenn die Wiegezelle von der Arbeitsfläche (mechanisch) entkoppelt angeordnet ist. Dadurch wird die Übertragung von Schwingungen, Stößen o.ä., das Messergebnis der Wiegezelle verfälschenden Einflüssen vermieden.

Insbesondere ist es vorgesehen, dass die Anlage Dosiereinrichtungen aufweist, deren Dosiernadeln relativ zur Ebene der Arbeitsfläche ortsfest angeordnet sind, wobei die Dosiernadel separat oder zusammen mit der Dosiereinrichtung in einer senkrecht zur Ebene der Arbeitsfläche verlaufenden Richtung heb- und senkbar angeordnet ist.

Um eine möglichst automatische Kalibrierung bzw. Wiegung ohne die Notwendigkeit manueller Eingriffe bzw. einer Bedienperson zu ermöglichen, ist es darüber hinaus in vorteilhafter Ausgestaltung der Wiegeeinrichtung vorgesehen, dass diese eine Ausschluss- und Zuführeinrichtung für Messbecher aufweist. Die Ausschleus- und Zuführeinrichtung dient dazu, einen mit dem Medium befüllten Messbecher nach dem Wiegen aus dem Bereich der Wiegezelle bzw. der Wiegeeinrichtung zu fördern und durch einen neuen, bisher noch nicht benutzten Messbecher zu ersetzen, der anschließend für einen weiteren Wiegevorgang von der zweiten Transporteinheit in den Bereich der Dosiereinrichtung transportiert werden kann.

Um eine möglichst geringe Anzahl unterschiedlicher Transporteinheiten auszubilden, ist es darüber hinaus von Vorteil, wenn die wenigstens eine zweite Transporteinheit durch Bestücken einer ersten Transporteinheit mit einem Umrüstsatz ausbildbar ist. Mit anderen Worten gesagt bedeutet dies, dass eine erste Transporteinheit zu einer zweiten Transporteinheit, und eine zweite Transporteinheit zu einer ersten Transporteinheit umbaubar ist.

Weiterhin umfasst die Erfindung auch ein Verfahren zum Durchführen eines Wiegeprozesses bei einer soweit beschriebenen, erfindungsgemäßen Anlage, wobei das Verfahren zumindest folgende Schritte umfasst: Zunächst erfolgt ein Transportieren eines Messbechers aus dem Bereich der Wiegeeinrichtung durch eine zweite Transporteinheit in den Bereich der Dosiereinrichtung. Anschließend erfolgt das Abgeben einer Sollmenge an Medium in den Messbecher durch die Dosiereinrichtung. Dann erfolgt ein Transport des mit dem Medium befüllten Messbecher in den Bereich der Wiegeeinrichtung. Anschließend erfolgt das Abstellen des Messbechers auf die Wiegezelle der Wiegeeinrichtung und das Freistellen des Messbechers von der zweiten Transporteinheit. Anschließend erfolgt das Messen der Istmenge an Medium im Messbecher mittels der Wiegezelle. Zuletzt erfolgt ggf. ein Entsorgen des mit dem Medium befüllten Messbechers aus dem Bereich der Wiegeeinrichtung und ein Bereitstellen eines unbefüllten Messbechers. Dabei kann das Entsorgen des Messbechers nach dem Wiegevorgang entweder nach jedem Wiegevorgang, oder aber bevorzugt (lediglich) dann erfolgen, wenn der Messbecher voll ist. Für den letztgenannten Fall kann die aktuell erfasste Ist-Menge durch Berücksichtigung der in dem Messbecher aus den letzten Wiegevorgängen bereits erfassten Massen des Mediums erfolgen.

Weitere Vorteile, Merkmale und Einzelheiten der Erfindung ergeben sich aus der nachfolgenden Beschreibung bevorzugter Ausführungsformen der Erfindung sowie anhand der Zeichnungen.

### Kurze Beschreibung der Zeichnungen

- Fig. 1: zeigt in einer vereinfachten Darstellung eine Vorrichtung zur Durchführung von Arbeitsprozessen an Werkstücken oder dgl. und
- Fig. 2 bis Fig. 11: jeweils in einer vereinfachten Seitenansicht den Bereich einer Wiegeeinrichtung während der Durchführung eines Wiegeprozesses an einer Dosiereinrichtung.

### Ausführungsformen der Erfindung

Gleiche Elemente bzw. Elemente mit gleicher Funktion sind in den Figuren mit den gleichen Bezugsziffern versehen.

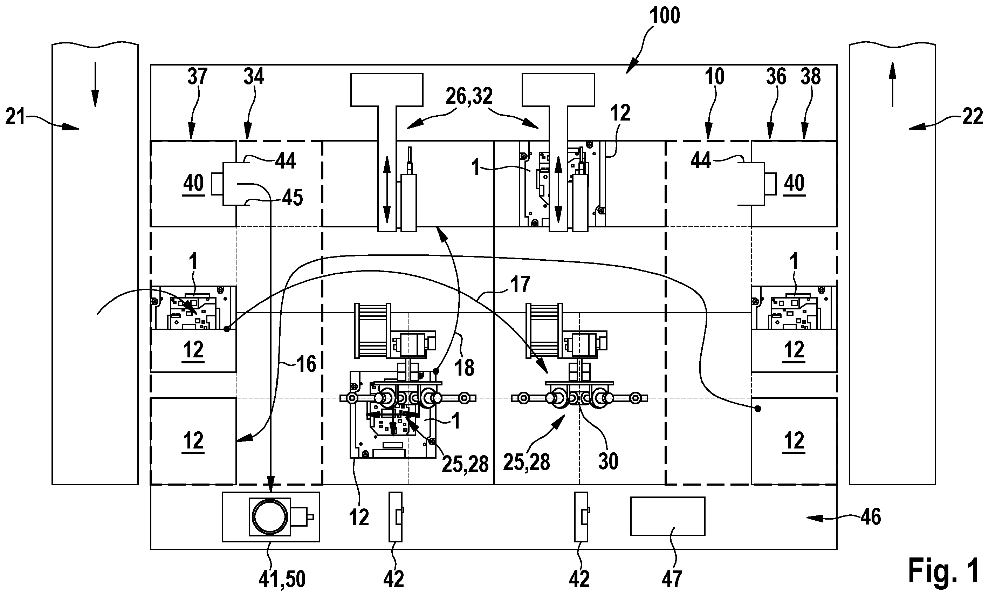

In der Fig. 1 ist stark vereinfacht eine Anlage 100 zur Durchführung von Arbeitsprozessen an Werkstücken 1 oder dgl. dargestellt. Bei den Werkstücken 1 kann es sich beispielsweise um Gehäuseteile o.ä. handeln, die mittels der Anlage 100 in einem lokalen bzw. definierten Bereich mit einem pastösen Medium M zur Abdichtung der Gehäuseteile oder zur Wärmeableitung o.ä. Zwecken versehen werden sollen.

Die Anlage 100 umfasst eine Arbeitsfläche 10, die horizontal angeordnet ist, wobei sich auf der Arbeitsfläche 10 mehrere erste Transporteinheiten 12, sogenannte Mover, befinden. Die ersten Transporteinheiten 12 sind von einer in den Figuren nicht dargestellten Steuereinrichtung individuell ansteuerbar, wobei die ersten Transporteinheiten 12 auf der Arbeitsfläche 10 frei bewegbar angeordnet sind. Hierzu dienen im Einzelnen nicht dargestellte elektromagnetische Antriebe, die es ermöglichen, dass die ersten Transporteinheiten 12 beliebige erste Förderwege 16 bis 18 ausführen können.

Beispielhaft dienen die ersten Transporteinheiten 12 dem Transport jeweils eines Werkstücks 1 oder dgl. im Bereich der Arbeitsfläche 10. Die Werkstücke 1 oder dgl. werden seitlich der Arbeitsfläche 10 mittels einer lediglich symbolisch dargestellten ersten Fördereinrichtung 21, die vorzugsweise in Form eines Linearförderers, wie eines Kettenförderers, eines Bandförderers o. ä. ausgebildet ist, der Anlage 100 zugeführt. Nach dem Durchführen von Arbeitsprozessen im Bereich der Anlage 100 werden die (bearbeiteten) Werkstücke 1 oder dgl. mittels einer, auf der der ersten Fördereinrichtung 21 gegenüberliegenden Seite der Arbeitsfläche 10 angeordneten, ebenfalls rein symbolisch dargestellten zweiten Fördereinrichtung 22 aus dem Bereich der Arbeitsfläche 10 bzw. der Anlage 100 wegtransportiert. Vorzugsweise ist die zweite Fördereinrichtung 22 ebenfalls in Form eines Linearförderers ausgebildet.

Mittels nicht dargestellter Greifeinrichtungen o.ä. Einrichtungen lassen sich die Werkstücke 1 oder dgl. von der ersten Fördereinrichtung 21 entnehmen und auf die ersten Transporteinheiten 12 absetzen. Ebenso dienen die nicht dargestellten Greifeinrichtungen o.ä. dazu, nach dem Durchführen der Arbeitsprozesse die Werkstücke 1 oder dgl. von den ersten Transporteinheiten 12 abzuheben und der zweiten Fördereinrichtung 22 zuzuführen.

Zum Durchführen der Arbeitsprozesse durch die Anlage 100 weist diese im Bereich sowie ggf. oberhalb der Arbeitsfläche 10 beispielhaft zwei erste Prozessstationen 25 und zwei zweite Prozessstationen 26 auf. Die ersten Prozessstationen 25, die seitlich nebeneinander angeordnet sind, sind jeweils als sogenannte Dispensstationen mit einer in der Ebene der Arbeitsfläche 10 ortsfest angeordneten Dosiereinrichtung 28 zum Abgeben des Mediums M ausgebildet, die jeweils eine senkrecht zur Ebene der Arbeitsfläche 10 hubbeweglich angeordnete Dosiernadel 30 aufweist. Bei den zweiten Prozessstationen 26 handelt es sich beispielsweise um Prüfeinrichtungen 32 in Form von Kameras o.ä. Einrichtungen, die dazu dienen, die durch die ersten Prozessstationen 25 durchgeführten Arbeitsprozesse zu überwachen bzw. auf eine richtige Ausführung zu kontrollieren.

Die Arbeitsfläche 10 weist jeweils seitlich neben den Prozessstationen 25 und 26 eine erste und zweite, jeweils durch eine gestrichelte Umrandung gekennzeichnete Bereitstellungszone 34, 36 auf, in deren Bereich erste Transporteinheiten 12 angeordnet sein können. Weiterhin dienen die beispielhaft rechteckförmigen Bereitstellungszonen 34 und 36, insbesondere im Bereich von Wartezonen 37, 38 dazu, wenigstens eine zweite Transporteinheit 40 aufzunehmen bzw. diese dort abzustellen.

Während die ersten Transporteinheiten 12 dazu dienen, die Werkstücke 1 oder dgl. den Prozessstationen 25, 26 zuzuführen, damit dort sogenannte Hauptprozesse (oben als Arbeitsprozesse bezeichnet) ablaufen können, dienen die zweiten Transporteinheiten 40 dazu, von den Hauptprozessen zeitlich und/oder örtlich unabhängige Nebenprozesse durchführen zu können. Die Nebenprozesse umfassen beispielsweise die Kalibrierung, das Überprüfen oder die Reinigung der Prozessstationen 25, 26 mittels jeweils wenigstens einer Prüfeinrichtung 41, Kalibiereinrichtung 42 oder Reinigungseinrichtung 47. Die Prüfeinrichtung 41, Kalibriereinrichtung 42 und Reinigungseinrichtung 47 sind beispielhaft in einem streifenförmigen Bereich 46 neben der Arbeitsfläche 10 angeordnet. Im Ausführungsbeispiel ist eine Prüfungseinrichtung 41 in Form einer Wiegeeinrichtung 50 ausgebildet.

Die zweite Transporteinheit 40 weist zur Durchführung unterschiedlicher Nebenprozesse bzw. zum Handling unterschiedlicher, zur Durchführung der Nebenprozesse erforderlicher Objekte eine gabelförmige Aufnahmeeinrichtung 44 auf, die in Form einer Schnittstelle 45 ausgebildet ist. Insbesondere lassen sich erste Transporteinheiten 12 und zweite Transporteinheiten 40 jeweils durch einen Umrüstsatz ineinander umwandeln bzw. umrüsten.

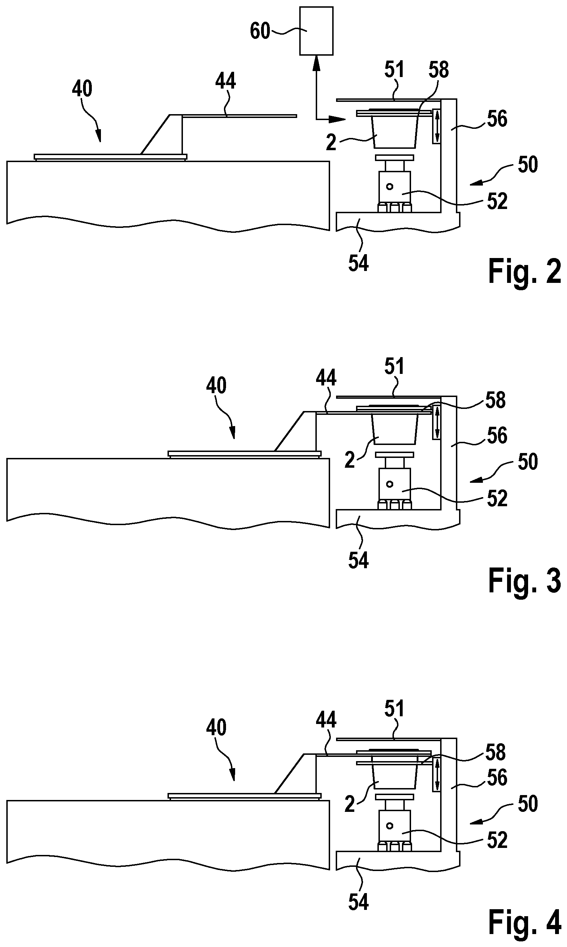

Wie anhand der Fig. 2 bis 11 erkennbar ist, weist die von einer Abdeckung 51 überdeckte Wiegeeinrichtung 50 eine Messzelle 52 auf, die im Bereich eines Sockels 54 angeordnet ist. Der Sockel 54 ist vorzugsweise von der Arbeitsfläche 10 mechanisch entkoppelt angeordnet, um eine Übertragung von Schwingungen, Stößen o.ä. auf die Messzelle 52 zu vermeiden. Weiterhin umfasst die Wiegeeinrichtung 50 eine Trägereinrichtung 56 mit einem heb- und senkbaren, beispielhaft gabelförmigen Hubelement 58, in dessen Bereich ein Messbecher 2 angeordnet bzw. von dem Hubelement 58 angehoben bzw. abgesenkt werden kann.

Zusätzlich ist es insbesondere vorgesehen, dass die Wiegeeinrichtung 50 mit einer im Einzelnen nicht dargestellten und daher lediglich symbolisch dargestellten Wechseleinrichtung 60 zusammenwirkt. Die Wechseleinrichtung 60 dient dazu, nach wenigstens einem Wiegevorgang einen im Bereich der Messzelle 52 angeordneten, mit einem Medium M befüllten Messbecher 2 aus dem Bereich der Wiegeeinrichtung 50 auszuschleusen und anschließend einen neuen, unbefüllten Messbecher 2 der Wiegeeinrichtung 50 zuzuführen, um einen weiteren Wiegevorgang durchführen zu können. Vorzugsweise erfolgt der Austausch des Messbechers 2 jedoch erst dann, wenn dieser nahezu vollständig mit Medium M (aus vorhergehenden Wiegevorgängen) befüllt ist.

Ergänzend wird erwähnt, dass es anstelle einer Wechseleinrichtung 60 auch vorgesehen sein kann, das Abführen bzw. Zuführen von eines Messbechers 2 durch die zweite Transporteinheit 40 durchzuführen.

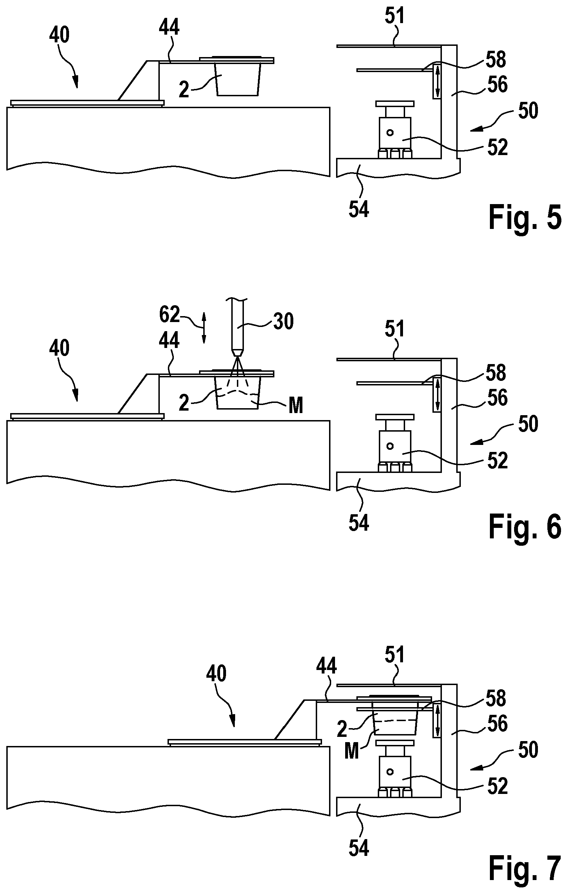

Weiterhin wird erwähnt, dass entsprechend der Darstellung der Fig. 6 die Dosiernadel 30 der Dosiereinrichtung 28 entsprechend der Richtung des Doppelpfeils 62 heb- und senkbar angeordnet ist, während ansonsten die Dosiereinrichtung 28 mit Blick auf deren relative Position zur Ebene der Arbeitsfläche 10 ortsfest angeordnet ist.

Die Wiegeeinrichtung 50 dient dazu, vor Beginn des Betriebs der Anlage 100, nach einer bestimmten Anzahl von Dosiervorgängen oder aber nach Abschluss des Betriebs der Anlage100 eine von der Dosiereinrichtung 28 über deren Dosiernadel 30 abgegebene Soll-Menge an flüssigen bzw. pastösem Medium M zu wiegen, um auf eine korrekte Menge bzw. Masse des Mediums M während des Betriebs der Anlage 100 schließen zu können. Hierzu wird die Funktionsweise der Anlage 100 mit Blick auf die Wiegeeinrichtung 50 anhand der Figurenfolge der Fig. 2 bis 11 wie folgt erläutert:
Entsprechend der Fig. 2 erfolgt zunächst ein Bewegen einer zweiten Transporteinheit 40 aus dem Bereich beispielhaft der Bereitstellungszone 34 in den Bereich der Wiegeeinrichtung 50. Hierzu ist es insbesondere vorgesehen, dass die Dosiernadel 30 bzw. die Dosiereinrichtung 28 zunächst in einer angehobenen Position angeordnet ist, derart, dass die zweite Transporteinheit 40 unterhalb der Dosiereinrichtung 28 bewegt werden kann, ohne dass diese mit der Dosiereinrichtung 28 bzw. deren Dosiernadel 30 kollidiert. Weiterhin ist anhand der Fig. 2 erkennbar, dass das Hubelement 28 einen (beispielhaft unbefüllten) Messbecher 2 in eine angehobene, von der Messzelle 52 beabstandete Position angehoben hat.

Anschließend erfolgt entsprechend der Darstellung der Fig. 3 eine Übernahme des Messbechers 2 von der zweiten Transporteinheit 40 durch in Kontaktbringen der Halteeinrichtung 48 mit dem Messbecher 2. Danach erfolgt entsprechend der Fig. 4 ein Absenken des Hubelements 58 zum Freistellen des Messbechers 2 von dem Hubelement 58. Anschließend wird entsprechend der Fig. 5 der Messbecher 2 von der zweiten Transporteinheit 40 aus dem Bereich der Wiegeeinrichtung 50 bewegt, und entsprechend der Fig. 6 unterhalb der Dosiernadel 30 der Dosiereinrichtung 28 positioniert.

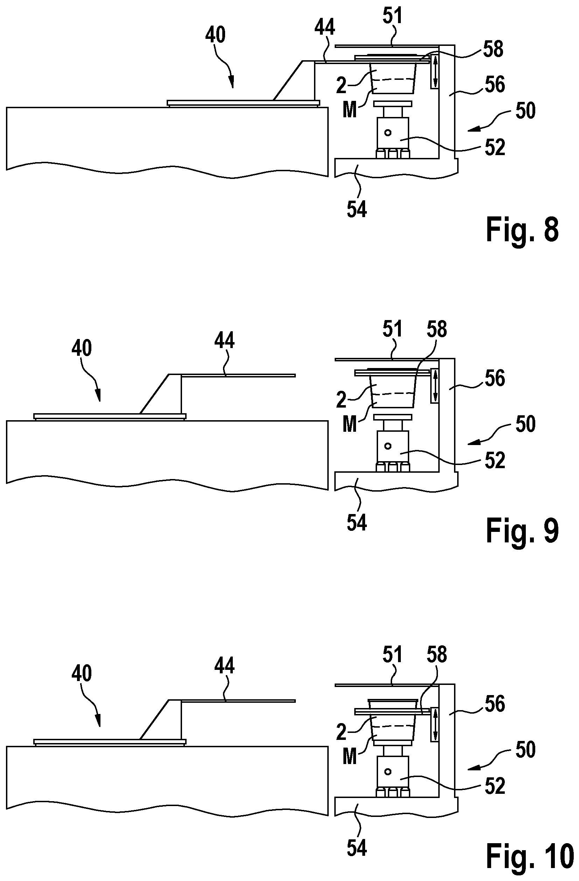

Die Dosiereinrichtung 28 gibt anschließend bei ggf. abgesenkter Dosiernadel 30 die Soll-Menge an Medium M an den Messbecher 2 ab. Anschließend erfolgt entsprechend der Fig. 7 ein Rücktransport des nunmehr mit dem Medium M befüllten Messbechers 2 in den Bereich der Wiegeeinrichtung 50. Dabei kann vorab durch Abstreifen des Becherrandes des Messbechers 2 an der Dosiernadelspitze ein Abstreifen von Medium M von der Dosiernadelspitze erfolgen. Dies wird durch die hochgenaue Bewegung des Messbechers 2 mittels der zweiten Transporteinheit 40 ermöglicht. Zur Übernahme des Messbechers 2 von der zweiten Transporteinheit 40 an das Hubelement 58 der Trägereinrichtung 56 erfolgt anschließend entsprechend der Fig. 8 ein Anheben des Hubelements 58, damit dieses in Kontakt mit dem Messbecher 2 gelangt. Ist dies erfolgt, erfolgt entsprechend der Darstellung der Fig. 9 ein Entfernen der zweiten Transporteinheit 40 aus dem Bereich der Wiegeeinrichtung 50.

Dann erfolgt entsprechend der Fig. 10 ein Absenken des Hubelements 58 mit dem Messbecher 2, um den Messbecher 2 auf die Messzelle 52 abzusenken. Das Absenken erfolgt derart, dass das Hubelement 58 den Messbecher 2 auf die Messzelle 52 abstellt, wobei zwischen dem Messbecher 2 und dem Hubelement 58 kein Kontakt mehr besteht. In dieser Position führt die Wiegeeinrichtung 50 bzw. die Messzelle 52 den Messvorgang durch, um zu überprüfen, ob die in den Messbecher 2 abgegebene Ist-Menge an Medium M der Soll-Menge M entspricht. Das Ergebnis wird zur Kalibrierung bzw. zur Einstellung der Dosiereinrichtung 28 benutzt.

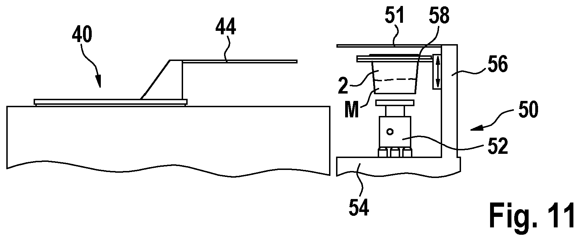

Zuletzt ist es entsprechend der Fig. 11 vorgesehen, dass das Hubelement 58 den Messbecher 2 wieder von der Messzelle 52 freistellt. In dieser Position kann beispielsweise der (teilweise oder vollständig) befüllte Messbecher 2 durch die Wechseleinrichtung 60 entsorgt und durch einen neuen, unbefüllten Messbecher 2 ersetzt werden.

Die soweit beschriebene Anlage 100 kann in vielfältiger Art und Weise abgewandelt bzw. modifiziert werden, ohne vom Erfindungsgedanken abzuweichen.

## Patentansprüche

1. Anlage (100) zur Durchführung von Arbeitsprozessen an Werkstücken (1) oder dgl., mit einer Arbeitsfläche (10), auf der durch elektromagnetische Antriebe voneinander unabhängig bewegbare erste Transporteinheiten (12) angeordnet sind, die dazu ausgebildet sind, die Werkstücke (1) oder dgl. aus einer ersten Fördereinrichtung (21) zu entnehmen, anschließend zur Durchführung der Arbeitsprozesse an den Werkstücken (21) oder dgl. verschiedenen Prozessstationen (25, 26) zuzuführen, und zuletzt die Werkstücke (1) oder dgl. nach dem Durchführen der Arbeitsprozesse an eine zweite Fördereinrichtung (22) zu übergeben, wobei die Prozessstationen (25, 26) zumindest eine Dosiereinrichtung (28) mit einer Dosiernadel (30) o.ä. Element zum Abgeben eines Mediums (M) an die Werkstücke (1) oder dgl. umfasst,
**dadurch gekennzeichnet,**
**dass** neben der Arbeitsfläche (10) eine Wiegeeinrichtung (50) mit einer Messzelle (52) zum Wiegen eines von der Messzelle (52) freistellbaren Messbechers (2) angeordnet ist, und dass zusätzlich wenigstens eine zweite, elektromagnetisch bewegbare Transporteinheit (40) dazu ausgebildet ist, den Messbecher (2) zwischen dem Bereich der Messzelle (52) und dem Bereich der Dosiereinrichtung (28) zu transportieren.

2. Anlage nach Anspruch 1,
**dadurch gekennzeichnet,**
**dass** die wenigstens eine zweite Transporteinheit (40) dazu ausgebildet ist, alternativ zum Messbecher (2) andere Objekte zum Bereich einer Prozessstation (25, 26) zu transportieren.

3. Anlage nach Anspruch 2,
**dadurch gekennzeichnet,**
**dass** die wenigstens eine zweite Transporteinrichtung (40) eine Aufnahmeeinrichtung (44) mit wenigstens einer standardisierten Schnittstelle (45) für die unterschiedlichen Objekte aufweist.

4. Anlage nach einem der Ansprüche 1 bis 3,
**dadurch gekennzeichnet,**
**dass** die wenigstens eine zweite Transporteinheit (40) bei Nichtgebrauch in einer Bereitstellungszone (34, 36) im Bereich der Arbeitsfläche (10) angeordnet ist.

5. Anlage nach einem der Ansprüche 1 bis 4,
**dadurch gekennzeichnet,**
**dass** die Wiegeeinrichtung (50) ein Hubelement (58) zum Freistellen des Messbechers (2) von der Wiegezelle (52) und zur Übergabe und Übernahme des Messbechers (2) an die bzw. von der zweiten Transporteinheit (40) aufweist.

6. Anlage nach einem der Ansprüche 1 bis 5,
**dadurch gekennzeichnet,**
**dass** die Wiegezelle (52) von der Arbeitsfläche (10) mechanisch entkoppelt angeordnet ist.

7. Anlage nach einem der Ansprüche 1 bis 6,
**dadurch gekennzeichnet,**
**dass** die Dosiereinrichtung (28) mit ihrer Dosiernadel (30) relativ zur Ebene der Arbeitsfläche (10) ortsfest angeordnet ist, und dass die Dosiernadel (30) separat oder zusammen mit der Dosiereinrichtung (28) in einer senkrecht zur Ebene der Arbeitsfläche (10) verlaufenden Richtung heb- und senkbar angeordnet ist.

8. Anlage nach einem der Ansprüche 1 bis 7,
**dadurch gekennzeichnet,**
**dass** der Wiegeeinrichtung (50) eine Wechseleinrichtung (60) für Messbecher (2) zugeordnet ist.

9. Anlage nach einem der Ansprüche 1 bis 8,
**dadurch gekennzeichnet,**
**dass** die wenigstens eine zweite Transporteinheit (40) durch Bestücken einer ersten Transporteinheit (12) mit einem Umrüstsatz ausbildbar ist.

10. Verfahren zum Durchführen eines Wiegeprozesses eines Mediums (M) bei einer Anlage (100), die nach einem der Ansprüche 1 bis 9 ausgebildet ist, umfassend zumindest folgende Schritte:
- Transportieren eines Messbechers (2) aus dem Bereich der Wiegeeinrichtung (50) in den Bereich der Dosiereinrichtung (28) durch eine zweite Transporteinheit (40)
- Abgeben einer Sollmenge an Medium (M) in den Messbecher (2) durch die Dosiereinrichtung (28)
- Transport des mit dem Medium (M) befüllten Messbechers (2) in den Bereich der Wiegeeinrichtung (50)
- Abstellen des Messbechers (2) auf die Wiegezelle (52) der Wiegeeinrichtung (50) und Freistellen von der zweiten Transporteinrichtung (40)
- Messen der Istmenge an Medium (M) durch die Wiegezelle (52)
- gegebenenfalls Entsorgen des mit dem Medium (M) befüllten Messbechers (2) aus dem Bereich der Wiegeeinrichtung (50) und Bereitstellen eines unbefüllten Messbechers (2)

## Claims

1. Installation (100) for carrying out working processes on workpieces (1) or the like, having a working surface (10) on which first transport units (12) which can be moved independently of one another by electromagnetic drives are arranged, said first transport units being designed to remove the workpieces (1) or the like from a first conveying device (21), to subsequently supply different process stations (25, 26) in order to carry out the working processes on the workpieces (21) or the like, and to lastly transfer the workpieces (1) or the like to a second conveying device (22) after the working processes have been carried out, wherein the process stations (25, 26) comprise at least one metering device (28) having a metering needle (30) or similar element for dispensing a medium (M) to the workpieces (1) or the like,
**characterized**
**in that**, in addition to the working surface (10), there is arranged a weighing device (50) having a measuring cell (52) for weighing a measuring cup (2) which can be released from the measuring cell (52), and in that additionally at least one second, electromagnetically movable transport unit (40) is designed to transport the measuring cup (2) between the region of the measuring cell (52) and the region of the metering device (28).

2. Installation according to Claim 1,
**characterized**
**in that** the at least one second transport unit (40) is designed to transport other objects, alternatively to the measuring cup (2), to the region of a process station (25, 26).

3. Installation according to Claim 2,
**characterized**
**in that** the at least one second transport device (40) has a receiving device (44) having at least one standardized interface (45) for the different objects.

4. Installation according to one of Claims 1 to 3,
**characterized**
**in that** when not in use the at least one second transport unit (40) is arranged in a provision zone (34, 36) in the region of the working surface (10).

5. Installation according to one of Claims 1 to 4,
**characterized**
**in that** the weighing device (50) has a lifting element (58) for releasing the measuring cup (2) from the weighing cell (52) and for transferring and taking up the measuring cup (2) to or from the second transport unit (40).

6. Installation according to one of Claims 1 to 5,
**characterized**
**in that** the weighing cell (52) is arranged mechanically decoupled from the working surface (10).

7. Installation according to one of Claims 1 to 6,
**characterized**
**in that** the metering device (28) with its metering needle (30) is arranged in a positionally fixed manner relative to the plane of the working surface (10), and in that the metering needle (30) is arranged so as to be liftable and lowerable separately or together with the metering device (28) in a direction running perpendicularly to the plane of the working surface (10).

8. Installation according to one of Claims 1 to 7,
**characterized**
**in that** a changer device (60) for measuring cups (2) is assigned to the weighing device (50).

9. Installation according to one of Claims 1 to 8,
**characterized**
**in that** the at least one second transport unit (40) can be formed by fitting a first transport unit (12) with a conversion kit.

10. Method for carrying out a weighing process for a medium (M) in an installation (100), which is formed according to one of Claims 1 to 9, comprising at least the following steps:
- transporting a measuring cup (2) from the region of the weighing device (50) into the region of the metering device (28) by way of a second transport unit (40)
- dispensing a setpoint amount of medium (M) into the measuring cup (2) by way of the metering device (28)
- transporting the measuring cup (2) filled with the medium (M) into the region of the weighing device (50)
- placing the measuring cup (2) onto the weighing cell (52) of the weighing device (50) and releasing it from the second transport device (40)
- measuring the actual amount of medium (M) by way of the weighing cell (52)
- if necessary discarding the measuring cup (2) filled with the medium (M) from the region of the weighing device (50) and providing an unfilled measuring cup (2).

## Revendications

1. Installation (100) pour effectuer des traitements de travail sur des pièces (1) ou similaires, avec une surface de travail (10) sur laquelle sont agencées des premières unités de transport (12) pouvant être déplacées indépendamment les unes des autres par des entraînements électromagnétiques, qui sont réalisées pour prélever les pièces (1) ou similaires d'un premier dispositif de transport (21), puis pour effectuer les traitements de travail sur les pièces (21) ou similaires à différents postes de traitement (25, 26), et enfin, après avoir effectué les traitements de travail, pour transférer les pièces (1) ou similaires à un deuxième dispositif de transport (22), les postes de traitement (25, 26) comprenant au moins un dispositif de dosage (28) avec une aiguille de dosage (30) ou un autre élément pour délivrer un fluide (M) aux pièces (1) ou similaires,
**caractérisée**
**en ce qu'**à côté de la surface de travail (10) est agencé un dispositif de pesée (50) avec une cellule de mesure (52) pour peser un bécher de mesure (2) pouvant être dégagé de la cellule de mesure (52), et **en ce qu'**en outre au moins une deuxième unité de transport (40) pouvant être déplacée électro-magnétiquement est réalisée pour transporter le bécher de mesure (2) entre la région de la cellule de mesure (52) et la région du dispositif de dosage (28).

2. Installation selon la revendication 1,
**caractérisée**
**en ce que** l'au moins une deuxième unité de transport (40) est réalisée pour transporter d'autres objets vers la région d'un poste de traitement (25, 26) en alternative au bécher de mesure (2).

3. Installation selon la revendication 2,
**caractérisée**
**en ce que** l'au moins un deuxième dispositif de transport (40) présente un dispositif de réception (44) avec au moins une interface standardisée (45) pour les différents objets.

4. Installation selon l'une quelconque des revendications 1 à 3,
**caractérisée**
**en ce que** l'au moins une deuxième unité de transport (40) est agencée, en cas de non-utilisation, dans une zone de fourniture (34, 36) dans la région de la surface de travail (10).

5. Installation selon l'une quelconque des revendications 1 à 4,
**caractérisée**
**en ce que** le dispositif de pesée (50) présente un élément de levage (58) pour dégager le bécher de mesure (2) de la cellule de pesée (52) et pour transférer et prendre en charge le bécher de mesure (2) vers ou depuis la deuxième unité de transport (40).

6. Installation selon l'une quelconque des revendications 1 à 5,
**caractérisée**
**en ce que** la cellule de pesée (52) est agencée de manière mécaniquement découplée de la surface de travail (10).

7. Installation selon l'une quelconque des revendications 1 à 6,
**caractérisée**
**en ce que** le dispositif de dosage (28) est agencé avec son aiguille de dosage (30) de manière fixe par rapport au plan de la surface de travail (10), et **en ce que** l'aiguille de dosage (30) est agencée de manière à pouvoir être soulevée et abaissée séparément ou conjointement avec le dispositif de dosage (28) dans une direction s'étendant perpendiculairement au plan de la surface de travail (10).

8. Installation selon l'une quelconque des revendications 1 à 7,
**caractérisée**
**en ce qu'**un dispositif d'échange (60) pour des béchers de mesure (2) est associé au dispositif de pesée (50).

9. Installation selon l'une quelconque des revendications 1 à 8,
**caractérisée**
**en ce que** l'au moins une deuxième unité de transport (40) peut être réalise en équipant une première unité de transport (12) d'un kit de conversion.

10. Procédé pour effectuer un traitement de pesée d'un fluide (M) dans une installation (100) réalisée selon l'une quelconque des revendications 1 à 9, comprenant au moins les étapes suivantes :
- le transport d'un bécher de mesure (2) de la région du dispositif de pesée (50) dans la région du dispositif de dosage (28) par une deuxième unité de transport (40)
- la distribution d'une quantité de consigne de fluide (M) dans le bécher de mesure (2) par le dispositif de dosage (28)
- le transport du bécher de mesure (2) rempli du fluide (M) dans la région du dispositif de pesée (50)
- le dépôt du bécher de mesure (2) sur la cellule de pesée (52) du dispositif de pesée (50) et le dégagement du deuxième dispositif de transport (40)
- la mesure de la quantité réelle de fluide (M) par la cellule de pesée (52)
- le cas échéant, l'élimination du bécher de mesure (2) rempli du fluide (M) de la région du dispositif de pesée (50) et la fourniture d'un bécher de mesure (2) non rempli
